# EUROPEAN PATENT APPLICATION

(11) **EP 4 404 352 A1**
(43) Date of publication of application: **24.07.2024**
(21) Application number: 22946471.4
(22) Date of filing: 26.08.2022
(51) Int. Cl.: H01M 50/258

(54) **BATTERY BOX, BATTERY AND POWER CONSUMING DEVICE**

(30) Priority: 16.06.2022 CN 202221508061 U
(71) Applicant: Contemporary Amperex Technology Co., Limited, Ningde, Fujian 352100 (CN)
(72) Inventor: LV, Pengfei, Ningde, Fujian 352100 (CN); LI, Pengfei, Ningde, Fujian 352100 (CN); CHEN, Renyu, Ningde, Fujian 352100 (CN); WU, Jinwu, Ningde, Fujian 352100 (CN)
(74) Representative: Holt, Lucy Rose
(86) International application number: PCT/CN2022/115131
(87) International publication number: WO 2023/240798

(57) **Abstract**

Disclosed in the present application are a battery box, a battery cell, a battery and a power consuming device. The battery box comprises a housing, an end cover and a sealing member, wherein the housing has an open end, the end cover matches the housing and covers the open end, the end cover is provided with a groove and a sealing area, the groove is arranged facing away from the housing, the sealing area is arranged on an outer peripheral surface of the end cover and corresponds to an inner side wall of the groove, and the sealing member is arranged between an inner wall of the housing and the sealing area. According to a battery housing of the present application, the sealing member is correspondingly arranged between the sealing area outside the groove and the inner wall of the housing, and the end cover and the housing are sealed using the sealing member. A sealing structure formed among the sealing area, the sealing member and the inner wall of the housing is located in a circumferential direction of the end cover, such that the space in the height direction inside the battery box that is occupied by the sealing structure is reduced, the space inside the battery box is increased, the pack grouping efficiency of the battery box is improved, and the battery box is applicable to a height-limited application scenario.

## Description

### Cross-Reference to Related Applications

The present application claims priority to Chinese Patent Application No. 202221508061.5, entitled "BATTERY CASE, BATTERY AND POWER CONSUMING DEVICE" and filed on June 16, 2022, the entire content of which is incorporated herein by reference.

### Technical Field

The present application relates to the technical field of electric vehicles, and in particular to a battery case, a battery and a power consuming device.

### Background Art

This part provides merely background information related to the present disclosure, which is not necessarily the prior art.

With the development of new energy, more and more fields use the new energy as power. Due to the advantages such as high energy density, recyclable charging, and safety and environmental protection, batteries are widely applied in the fields of new energy vehicles, consumer electronics, energy storage systems, etc. The battery includes a plurality of battery modules and a battery case. The plurality of battery modules are accommodated in the battery case to prevent liquid or other foreign matter from affecting charging or discharging of the battery modules.

An existing battery case includes a housing and an end cap. The end cap is connected and fixed to the housing by means of a bolt, and a sealing gasket is arranged between the end cap and the housing to seal the battery case. However, the structure of sealing connection between the end cap and the housing by means of the bolt and the sealing gasket occupies the space in a height direction inside the battery case, resulting in a low PACK grouping efficiency of the battery case and inapplicability to application scenarios in which the height is limited.

### Summary of the Invention

In view of the problems described above, the present application provides a battery case, a battery and a power consuming device, which can solve the problem that a sealing structure occupies the space in a height direction inside the battery case.

In a first aspect of the present application, a battery case is provided. The battery case includes a housing, an end cap and a sealing member. The housing has an open end. The end cap fits with the housing and covers the open end, the end cap is provided with a groove and a sealing region, the groove is provided in a surface of the end cap facing away from the housing, and the sealing region is arranged on a peripheral surface of the end cap and corresponding to an inner side wall of the groove. The sealing member is arranged between an inner wall of the housing and the sealing region.

According to the battery housing of the present application, when the end cap is connected and fixed to the housing, the end cap closes the open end of the housing, and a part of a body of the end cap is arranged in the open end of the housing. The sealing member is correspondingly arranged between the sealing region on an outer side of the groove and the inner wall of the housing, and the sealing between the end cap and the housing is realized by using the sealing member. A sealing structure formed between the sealing region, the sealing member and the inner wall of the housing is located in a circumferential direction of the end cap, which reduces the space in a height direction occupied by the sealing structure inside the battery case, so that the space inside the battery case is increased, the PACK grouping efficiency of the battery case is improved, and the battery case can be applied to application scenarios in which the height is limited.

In some embodiments of the present application, the groove is provided in the height direction of the housing, and the dimension of the sealing region in the height direction of the housing is less than or equal to the depth of the groove. The groove is formed in the end cap, and its depth direction is arranged in the height direction of the housing. The sealing region is formed on an edge of the end cap at the position where the edge of the end cap corresponds to a side wall of the groove. Controlling the dimension of the sealing region in the height direction of the housing enables the space occupied by the sealing structure in the height direction of the battery case to be further reduced while ensuring the sealing effect between the end cap and the housing, so that the internal space inside the battery case is increased.

In some embodiments of the present application, the dimension of the sealing region in the height direction of the housing is 10 mm, and the distance between the sealing region and the inner wall of the housing is 10 mm. In comparison with the prior art, the sealing region is sized, so that the space occupied by the sealing structure in the height direction of the battery case is effectively reduced, and the internal space of the battery case is increased, while ensuring the sealing effect between the end cap and the housing.

In some embodiments of the present application, a side wall of the groove is connected and fixed to the housing by means of TOX riveting. The side wall of the groove is connected and fixed to the inner wall of the housing by means of TOX riveting, and the sealing member is sandwiched between the inner wall of the housing and the sealing region of the end cap. By means of TOX riveting, the connection strength is high, which ensures the sealing effect between the end cap and the housing, and at the same time, it is easy to assemble the end cap and the housing, so that the production efficiency can be effectively improved.

In some embodiments of the present application, at least one TOX riveting point of the side wall of the groove and the housing is provided, the sealing member is provided with avoidance holes with the same number as the TOX riveting points, and the avoidance holes corresponds to the TOX riveting points in a one-to-one basis. The sealing member is provided with the avoidance holes, and when the end cap is connected and fixed to the housing, the avoidance holes are arranged corresponding to the TOX riveting points, which ensures that the end cap and the housing can be riveted effectively, and further ensures the strength of connection and fixation between the end cap and the housing.

In some embodiments of the present application, a plurality of TOX riveting points are provided, and all the TOX riveting points are arranged at intervals in a circumferential direction of the open end. The plurality of TOX riveting points are provided to further increase riveting positions between the end cap and the housing, so that the strength of connection between the end cap and the housing is further enhanced.

In some embodiments of the present application, a first connecting structure is provided on an edge of the end cap, a second connecting structure is provided on a peripheral surface of the open end, and the first connecting structure fits with the second connecting structure to connect and fix the end cap to the housing. The second connecting structure is located on an outer side of the housing, and the first connecting structure fits with the second connecting structure to realize the connection and fixation between the end cap and the housing. The connection position between the end cap and the housing is provided on the outer side of the battery case, which not only facilitates the connection and fixation between the end cap and the housing, but also further avoids occupying the internal space of the battery case.

In some embodiments of the present application, the second connecting structure is of a plate-like structure in snap fit with the first connecting structure, and a side of the plate-like structure facing the bottom of the housing is arranged at a preset angle a with respect with a side face of the housing, wherein 0° < a ≤ 90°. The second connecting structure is configured as the plate-like structure, the angle a between the plate-like structure and the outer surface of the housing is set such that the second connecting structure of the plate-like structure is inclined to the side of the bottom of the housing, and when the first connecting structure fits with the second connecting structure, the strength of the first connecting structure and the second connecting structure is ensured.

In some embodiments of the present application, the first connecting structure is of a hook structure. The first connecting structure is configured as the hook structure, so that the end cap is connected and fixed to the housing so long as the hook structure is hooked onto the second connecting structure of the plate-like structure. The hook structure has a simple structure and a low manufacturing cost, and facilitates the assembly when the end cap is connected and fixed to the housing.

In some embodiments of the present application, the hook structure is provided with a notch at a corner of the end cap. The first connecting structure of the hook structure is arranged in the circumferential direction of the end cap, the end cap has the corner, and the hook structure is provided with the notch at the corner, so that the hook structure is prevented from interfering at the corner, and the fit between the first connecting structure and the second connecting structure is ensured.

In some embodiments of the present application, the first connecting structure is of an edge-folded structure. The first connecting structure is configured as the edge-folded structure. When the end cap is connected and fixed to the housing, the first connecting structure is edge-folded by using an edge folding apparatus after the end cap, the sealing member and the housing are mounted in place, to connect and fix the first connecting structure to the second connecting structure. The first connecting structure is configured as the edge-folded structure, which improves the strength of connection between the first connecting structure and the second connecting structure, and further ensures the strength of connection between the end cap and the housing.

In some embodiments of the present application, the edge-folded structure is provided with a notch at a corner of the end cap. The first connecting structure of the edge-folded structure is arranged in the circumferential direction of the end cap, the end cap has the corner, and the edge-folded structure is provided with the notch at the corner, so that the edge-folded structure is prevented from interfering at the corner, and the fit between the first connecting structure and the second connecting structure is ensured.

In some embodiments of the present application, an abutting structure is provided in the housing, the abutting structure is arranged in the circumferential direction of the open end, and the sealing member abuts against the abutting structure. Providing the abutting structure enables the sealing member to be supported by using an abutting member, so that the mounting position of the sealing member is ensured, which in turn ensures the sealing effect between the end cap and the housing.

In a second aspect of the present application, a battery is provided. The battery includes a battery case as described above.

In a third aspect of the present application, a power consuming device is provided. The power consuming device includes a battery as described above.

The above description is only an overview of the technical solutions of the present application. In order to more clearly understand the technical means of the present application to implement same according to the contents of the description, and in order to make the above and other objectives, features and advantages of the present application more obvious and understandable, specific implementations of the present application are exemplarily described below.

### Brief Description of the Drawings

FIG. 1 schematically shows a schematic structural diagram of a vehicle according to an embodiment of the present application;
FIG. 2 schematically shows a schematic structural diagram of a battery pack according to an embodiment of the present application;
FIG. 3 schematically shows a schematic structural diagram of a battery module according to an embodiment of the present application;
FIG. 4 schematically shows a schematic exploded structural diagram of a battery cell according to an embodiment of the present application;
FIG. 5 schematically shows a schematic structural diagram of a battery case according to a first embodiment of the present application in an assembled state;
FIG. 6 is a schematic exploded structural diagram of the battery case shown in FIG. 5;
FIG. 7 schematically shows a schematic structural diagram of a battery case according to a second embodiment of the present application with a sealing member not shown;
FIG. 8 is a schematic enlarged structural diagram of part A of the battery case shown in FIG. 7;
FIG. 9 schematically shows a schematic structural diagram of a battery case according to a third embodiment of the present application with a sealing member not shown; and
FIG. 10 is a schematic enlarged structural diagram of part B of the battery case shown in FIG. 9.

### List of reference signs:

1000: Vehicle; 2000: TOX die, 2001: Upper die, 2002: Lower die;
100: Battery, 200: Controller, 300: Motor;
10: Battery module, 20: Battery case;
11: Battery cell;
111: Cover, 111a: Electrode terminal;
112: Shell body;
113: Cell assembly;
21: End cap;
211: Groove, 212: Sealing region, 213: First connecting structure, 214: Notch;
22: Housing;
221: Abutting structure, 222: Second connecting structure;
23: Sealing member;
231: Avoidance hole.

### Detailed Description of Embodiments

Embodiments of the technical solutions of the present application will be described in detail below with reference to the accompanying drawings. The following embodiments are merely intended to more clearly illustrate the technical solutions of the present application, so they merely serve as examples, but are not intended to limit the scope of protection of the present application.

Unless otherwise defined, all technical and scientific terms used herein have the same meanings as those commonly understood by those skilled in the art to which the present application belongs. The terms used herein are merely for the purpose of describing specific embodiments, but are not intended to limit the present application. The terms "comprising" and "having" and any variations thereof in the description and the claims of the present application as well as the brief description of the accompanying drawings described above are intended to cover non-exclusive inclusion.

In the description of the embodiments of the present application, the technical terms "first", "second", etc. are merely used for distinguishing different objects, and are not to be construed as indicating or implying relative importance or implicitly indicating the number, particular order or primary-secondary relationship of the indicated technical features. In the description of the embodiments of the present application, the phrase "a plurality of" means two or more, unless otherwise explicitly and specifically defined.

The phrase "embodiment" mentioned herein means that the specific features, structures, or characteristics described in conjunction with the embodiment can be encompassed in at least one embodiment of the present application. The phrase at various locations in the description does not necessarily refer to the same embodiment, or an independent or alternative embodiment exclusive of another embodiment. Those skilled in the art understand explicitly or implicitly that the embodiment described herein may be combined with another embodiment.

In the description of the embodiments of the present application, the term "and/or" is merely intended to describe the associated relationship of associated objects, indicating that three relationships can exist, for example, A and/or B can include: only A exists, both A and B exist, and only B exists. In addition, the character "/" herein generally indicates an "or" relationship between the associated objects.

In the description of the embodiments of the present application, the term "a plurality of" means two or more (including two), similarly the term "a plurality of groups" means two or more groups (including two groups), and the term "a plurality of pieces" means two or more pieces (including two pieces).

In the description of the embodiments of the present application, the orientation or position relationship indicated by the technical terms "central", "longitudinal", "transverse", "length", "width", "thickness", "upper", "lower", "front"; "rear", "left", "right", "vertical", "horizontal", "top", "bottom", "inner", "outer", "clockwise", "counterclockwise", "axial", "radial", "circumferential", etc. are based on the orientation or position relationship shown in the accompanying drawings and are merely intended to facilitate and simplify the description of the embodiments of the present application, rather than indicating or implying that the apparatus or element considered must have a particular orientation or be constructed and operated in a particular orientation, and therefore not to be construed as limiting the embodiments of the present application.

In the description of the embodiments of the present application, unless otherwise explicitly specified and defined, the technical terms such as "mount", "couple", "connect", and "fix" should be understood in a broad sense, for example, they may be a fixed connection, a detachable connection, or an integrated connection; may be a mechanical connection or an electric connection; and may be a direct connection or an indirect connection by means of an intermediate medium, or may be internal communication between two elements or interaction between the two elements. For those of ordinary skill in the art, the specific meanings of the above terms in the embodiments of the present application can be understood according to specific situations.

At present, from the perspective of the development of the market situation, traction batteries are used more and more widely. The traction batteries are not only used in energy storage power systems such as hydroelectric power plants, thermal power plants, wind power plants and solar power plants, but also widely used in electric transportation means such as electric bicycles, electric motorcycles, and electric vehicles and in many fields such as military equipment and aerospace. With the continuous expansion of the application field of traction batteries, market demand for traction batteries is also expanding.

The applicant noted that an end cap of an existing battery case is connected and fixed to a housing of the battery case by means of a bolt, and a sealing gasket is arranged between the end cap and the housing to seal the battery case. However, the structure of sealing connection between the end cap and the housing by means of the bolt and the sealing gasket occupies the space in a height direction inside the battery case, resulting in a low PACK grouping efficiency of the battery case and inapplicability to application scenarios in which the height is limited. Therefore, how to increase the internal space of the battery housing has become an urgent technical problem to be solved by those skilled in the art.

In order to solve the problem that the sealing structure occupies the space in the height direction inside the battery case, the applicant has found that the end cap may be provided with a groove, and a sealing region may be provided on the end cap on the outer side of a side wall of the groove. When the end cap is connected and fixed to the housing, the end cap closes an open end of the housing, and a part of a body of the end cap is arranged in the open end of the housing. A sealing member is correspondingly arranged between the sealing region on the outer side of the groove and an inner wall of the housing, and the sealing between the end cap and the housing is realized by using the sealing member. A sealing structure formed between the sealing region, the sealing member and the inner wall of the housing is located in a circumferential direction of the end cap, which reduces the space in a height direction occupied by the sealing structure inside the battery case, so that the space inside the battery case is increased, the PACK grouping efficiency of the battery case is improved, and the battery case can be applied to application scenarios in which the height is limited.

The battery cell disclosed in the embodiments of the present application may be used in, but is not limited to, a power consuming device, such as a vehicle, a ship, or an aircraft. A power supply system provided with the power consuming device composed of a battery cell, a battery and the like disclosed in the present application may be used.

The embodiments of the present application provide a power consuming device using a battery as a power supply. The power consuming device may be, but is not limited to, a mobile phone, a tablet, a laptop, an electric toy, an electric tool, an electric scooter, an electric vehicle, a ship, a spacecraft, etc. The electric toy may include a stationary or mobile electric toy, such as a game console, an electric vehicle toy, an electric ship toy, and an electric airplane toy. The spacecraft may include an airplane, a rocket, a space shuttle, a spaceship, etc.

It should be understood that the technical solutions described in the embodiments of the present application are not only applicable to the battery and the power consuming device described above, but also applicable to all batteries each including a battery case and power consuming devices using batteries. However, for the brevity of description, in the following embodiments, the electric vehicle is used as an example for description.

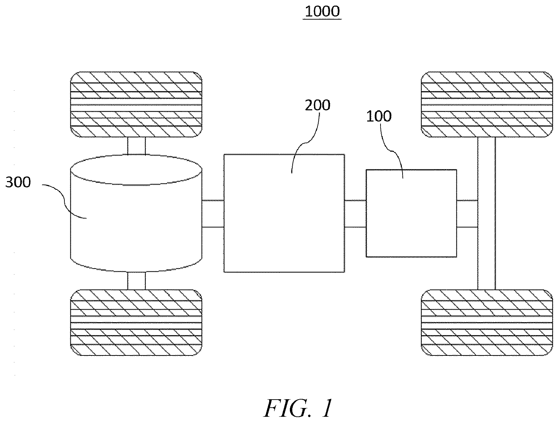

Referring to FIG. 1, FIG. 1 is a schematic structural diagram of a vehicle 1000 according to some embodiments of the present application. The vehicle 1000 may be a fuel vehicle, a gas vehicle, or a new energy vehicle. The new energy vehicle may be a battery electric vehicle, a hybrid electric vehicle, or an extended-range vehicle, etc. A battery 100 is provided inside the vehicle 1000, and the battery 100 may be arranged at the bottom, the front or the back of the vehicle 1000. The battery 100 may be configured to supply power to the vehicle 1000. For example, the battery 100 may be used as a power supply for operating the vehicle 1000. The vehicle 1000 may further include a controller 200 and a motor 300. The controller 200 is configured to control the battery 100 to supply power to the motor 300, for example, to meet working power requirements during starting, navigation and traveling of the vehicle 1000.

In some embodiments of the present application, the battery 100 can not only serve as a power supply for operating the vehicle 1000, but also serve as a power supply for driving the vehicle 1000, instead of or partially instead of fuel or natural gas, to provide driving power for the vehicle 1000.

In order to meet different power demands for use, the battery 100 may include a plurality of battery cells 11, the battery cell 11 referring to a minimum unit that constitutes a battery module 10 or the battery 100. The plurality of battery cells 11 may be connected in series and/or in parallel via electrode terminals 111a for various applications. The battery 100 mentioned in the present application includes the battery module 10 or a battery pack. The plurality of battery cells 11 may be connected in series or in parallel or in series-parallel. The series-parallel connection refers to a combination of serial connection and parallel connection. The battery 100 may also be referred to as a battery pack. In the embodiments of the present application, the plurality of battery cells 11 may directly form a battery pack, or may first form battery modules 10, and the battery modules 10 may then form a battery pack.

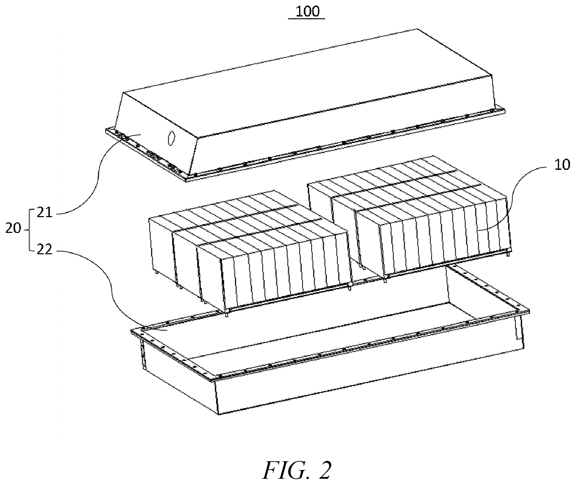

FIG. 2 shows a schematic structural diagram of a battery 100 according to an embodiment of the present application. In FIG. 2, the battery 100 may include a plurality of battery modules 10 and a battery case 20. The plurality of battery modules 10 are accommodated in the battery case 20. The battery case 20 is used to accommodate the battery cells 11 or the battery modules 10, so as to prevent liquid or other foreign matter from affecting charging or discharging of the battery cells 11. The battery case 20 may be of a simple three-dimensional structure such as an individual cuboid, cylinder or sphere, or of a complex three-dimensional structure composed of simple three-dimensional structures such as a cuboid, a cylinder or a sphere, which is not limited in the embodiments of the present application. A material of the battery case 20 may be an alloy material such as aluminum alloy and ferroalloy, or a polymer material such as polycarbonate and polyisocyanurate foam plastic, or a composite material such as a combination of glass fiber and epoxy resin, which is not limited in the embodiments of the present application.

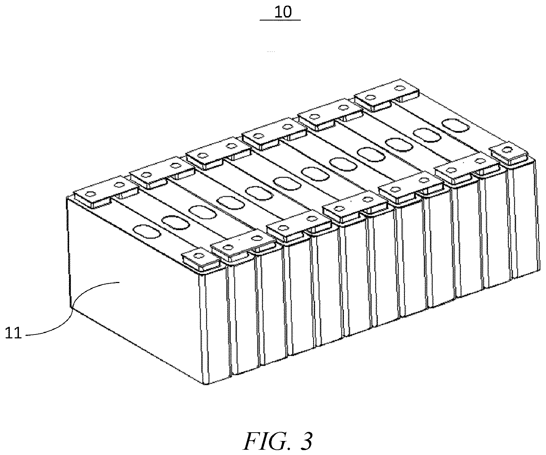

FIG. 3 shows a schematic structural diagram of a battery module 10 according to an embodiment of the present application. In FIG. 3, the battery module 10 may include a plurality of battery cells 11. The plurality of battery cells 11 may be first connected in series or in parallel or in series-parallel to form a battery module 10, and the plurality of battery modules 10 may be then connected in series or in parallel or in series-parallel to form a battery. In the present application, the battery cell 11 may include a lithium-ion battery cell, a sodium-ion battery cell, a magnesium-ion battery cell, etc., which is not limited in the embodiments of the present application. The battery cell 11 may be cylindrical, flat, cuboid or in another shape, which is not limited in the embodiments of the present application. The battery cells 11 are generally divided into three types depending on the way of package: cylindrical battery cells, prismatic battery cells and pouch battery cells, which is also not limited in the embodiments of the present application.

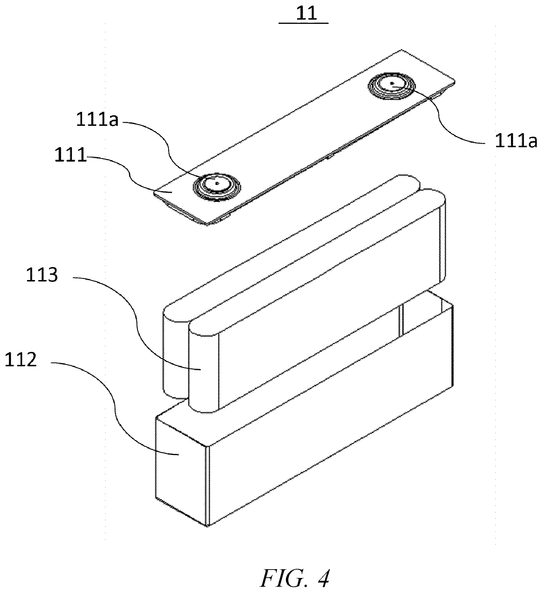

In some embodiments, the battery cell 11 refers to the minimum unit of the battery 100. As shown in FIG. 4, the battery cell 11 includes a cell assembly 113. A cover 111 refers to a component that covers an opening of a shell body 112 to isolate an internal environment of the battery cell 11 from an external environment. The end cap 111 may be provided with functional components such as an electrode terminal 111a, and the electrode terminal 111a may be electrically connected to the cell assembly 113 for outputting or inputting electric energy of the battery cell 11. The shell body 112 is an assembly for fitting with the cover 111 to form the internal environment of the battery cell 11, wherein the formed internal environment may be used for accommodating the cell assembly 113, an electrolyte solution (not shown in the figure) and other components.

In some embodiments, as shown in FIG. 2, the battery case 20 may include an end cap 21, a sealing member and a housing 22. The end cap 21 and the housing 22 are fitted together in a covering manner and the sealing member is arranged between the end cap 21 and the housing 22. A space for accommodating the battery cell is jointly defined by the end cap 21 and the housing 22. At the same time, the joint between the end cap 21 and the housing 22 is sealed by using the sealing member.

The end cap 21 refers to a component that covers an opening of the housing 22 to isolate an internal environment of the battery from an external environment. Without limitation, the end cap 21 may be shaped to adapt to the shape of the housing 22 so as to fit with the housing 22. Optionally, the end cap 21 may be made of a material with certain hardness and strength (such as aluminum alloy or rigid plastics), and thus the end cap 21 is less prone to deformation when being pressed or collided, so that the battery can have a higher structural strength, and safety performance can also be improved.

The housing 22 is an assembly that is configured to fit with the end cap 21 to form the internal environment of the battery, wherein the formed internal environment may be used for accommodating the battery module 10 and other components. The housing 22 and the end cap 21 may be independent components, an opening may be provided in the housing 22, and the end cap 21 covers the opening at the opening to form the internal environment of the battery cell. Without limitation, the end cap 21 and the housing 22 may also be integrated with each other. Specifically, the end cap 21 and the housing 22 may form a common connection face before other components are inserted into the housing. When the interior of the housing 22 needs to be packaged, the end cap 21 then covers the housing 22. The housing 22 may be of various shapes and various sizes, for example, in the shape of a cuboid, a square, etc. Specifically, the shape of the housing 22 may be determined according to the specific shape and size of the battery module. The housing 22 may be made of various materials, such as copper, iron, aluminum, stainless steel, an aluminum alloy, plastic, which is not particularly limited in the embodiments of the present application.

The sealing member 23 is a component for sealing the joint between the housing 22 and the end cap 21. The sealing member 23 is a flexible member. After the end cap 21 and the housing 22 are assembled and fixed, the sealing member 23 abuts against each of an inner wall of the housing 22 and a sealing region and deforms (elastically deforms), thus ensuring the sealing effect between the end cap 21 and the housing 22 and further preventing the external environment from adversely affecting the interior of the battery case 20. Optionally, the sealing member 23 may be a rubber ring or a silicone ring, etc. The sealing member 23 is configured as a rubber ring or a silicone ring to ensure good sealing performance of the sealing member 23 and prevent deterioration of the sealing of the battery case 20 due to aging of the sealing member 23.

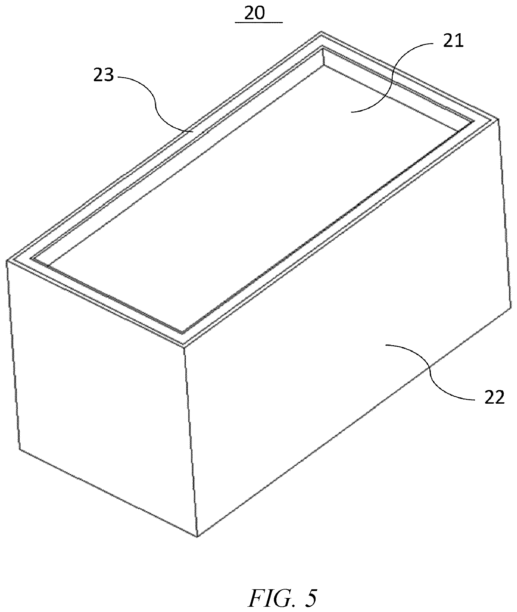

According to some embodiments of the present application, as shown in FIG. 5 to FIG. 10, the battery case 20 includes a housing 22, an end cap 21 and a sealing member 23. The housing 22 has an open end. The end cap 21 fits with the housing 22 and covers the open end. The end cap 21 is provided with a groove 211 and a sealing region 212. The groove 211 is provided in a surface of the end cap 21 facing away from the housing 22, and the sealing region 212 is arranged on a peripheral surface of the end cap 21 and corresponding to an inner side wall of the groove 211. The sealing member 23 is arranged between the inner wall of the housing 22 and the sealing region 212.

Specifically, when the end cap 21 is connected and fixed to the housing 22, the end cap 21 closes the open end of the housing 22, and a part of a body of the end cap 21 is arranged in the open end of the housing 22. The sealing member 23 is correspondingly arranged between the sealing region 212 on an outer side of the groove 211 and the inner wall of the housing 22, and the sealing between the end cap 21 and the housing 22 is realized by using the sealing member 23. A sealing structure formed between the sealing region 212, the sealing member 23 and the inner wall of the housing 22 is located in a circumferential direction of the end cap 21, which reduces the space in a height direction occupied by the sealing structure inside the battery case 20, so that the space inside the battery case 20 is increased, the PACK grouping efficiency of the battery case 20 is improved and the battery case 20 can be applied to application scenarios in which the height is limited.

It should be understood that the sealing region 212 is arranged in the circumferential direction of the end cap 21, and the sealing region 212 extends along the circumference of the end cap 21. After the end cap 21 and the sealing member 23 are mounted in place at the open end of the housing 22, one side of the sealing member 23 abuts against the sealing region 212, and the other side (the side facing away from the sealing region 212) of the sealing member 23 abuts against the inner wall of the housing 22, so that the space between the housing 22 and the end cap 21 is sealed by using the sealing member 23, which ensures the sealing of the battery case 20 and prevents the external environment from adversely affecting the interior of the battery case 20.

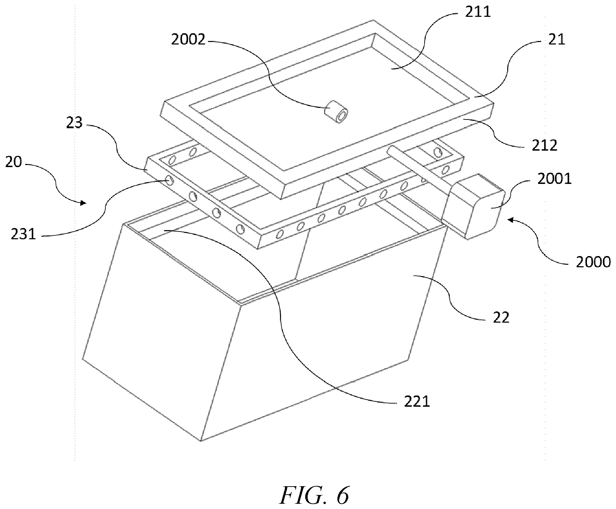

In addition, in an embodiment of the present application, as shown in FIG. 6, the sealing region 212 is formed on an edge of the end cap 21 and corresponds to a side wall of the groove 211. After the end cap 21 fits with the housing 22, the sealing region 212 enters the housing 22 from the open end of the housing 22. The sealing member 23 is arranged between the sealing region 212 and the inner wall of the housing 22. Compared with the fact that the existing sealing member 23 arranged below the end cap 21, the sealing structure formed by the sealing member 23 enables the space occupied in a height direction of the housing 22 to be reduced, so that the PACK grouping efficiency of the battery case 20 is improved and the battery case 20 can be applied to application scenarios in which the height is limited.

In some embodiments of the present application, the groove 211 is provided in the height direction of the housing 22, and the dimension of the sealing region 212 in the height direction of the housing 22 is less than or equal to the depth of the groove 211.

Specifically, the groove 211 is provided in a side face of the end cap 21 facing away from the housing 22, and a depth direction of the groove 211 is arranged in the height direction of the housing 22. The sealing region 212 is formed on the edge of the end cap 21 at the position where the edge of the end cap 21 corresponds to the side wall of the groove 211. Controlling the dimension of the sealing region 212 in the height direction of the housing 22 enables the space occupied by the sealing structure in the height direction of the battery case 20 to be further reduced while ensuring the sealing effect between the end cap 21 and the housing 22, so that the internal space inside the battery case 20 is increased.

It should be notated that in the present application, the end cap 21 is a rectangular plate, the groove 211 is provide in one side face of the rectangular plate (the groove 211 may be provided by punching a plate-like part or removing a material (for example, the groove 211 is milled by a milling cutter)), and the sealing region 212 is formed on the edge of the rectangular plate and corresponds to the side wall of the groove 211. Moreover, the dimension of the sealing region 212 in the height direction of the housing 22 is less than or equal to the depth of the groove 211 (the dimension of the groove 211 in the height direction of the housing 22). Controlling the dimension of the sealing region 212 in the height direction of the housing 22 enables the edge of the end cap 21 to fully meet the sealing requirements, which in turn ensures the sealing of the battery case 20.

In addition, the sealing region 212 is adapted to the structure of the sealing member 23, that is, the sealing region 212 is sized to meet the requirements for abutting against the sealing member 23 and sealing.

In some embodiments of the present application, the dimension of the sealing region in the height direction of the housing is 10 mm, and the distance between the sealing region and the inner wall of the housing is 10 mm. In comparison with the prior art, the sealing region is sized, so that the space occupied by the sealing structure in the height direction of the battery case is effectively reduced, and the internal space of the battery case is increased, while ensuring the sealing effect between the end cap and the housing.

In some embodiments of the present application, the side wall of the groove 211 is connected and fixed to the housing 22 by means of TOX riveting (also called rivetless riveting).

Specifically, when the end cap 21 is connected and fixed to the housing 22, the end cap 21 and the sealing member 23 are mounted in place at the open end of the housing 22, the side wall of the groove 211 is riveted and fixed to the housing 22 are by using a TOX riveting apparatus, and the sealing member 23 is sandwiched between the inner wall of the housing 22 and the sealing region 212 of the end cap 21. By means of TOX riveting, the connection strength is high, which ensures the sealing effect between the end cap 21 and the housing 22, and at the same time, it is easy to assemble the end cap 21 and the housing 22, so that the production efficiency can be effectively improved.

It should be understood that when the end cap 21 is fixed to the housing 22 by means of TOX riveting, a lower TOX die 2002 of a TOX die 2000 is arranged in the groove 211 of the end cap 21 and an upper TOX die 2001 is arranged on an outer side of the housing 22. During fixation by means of riveting, the lower TOX die 2002 abuts against the side wall of the groove 211, and the upper TOX die 2001 is driven to rivet from the outer side of the housing 22 to one side of the end cap 21, thereby riveting the housing 22 and the end cap 21 together.

In addition, the end cap 21 is connected and fixed to the housing 22 by means of TOX riveting, and by means of riveting from the housing 22 to one side of the side wall of the groove 211, formation of a protrusion structure on an outer surface of the battery case 20 is prevented, which in turn ensures variations of external dimensions of the battery case 20, so that the battery case 20 can meet the use requirements in various application scenarios.

Furthermore, when the end cap 21 is connected and fixed to the housing 22 by means of TOX riveting, the connecting structure between the end cap 21 and the housing 22 is arranged in a direction perpendicular to the height direction of the housing 22, which further prevents the connecting and fixing structure from occupying the space in the height direction of the housing 22, so that the internal space of the battery case 20 further improves the PACK grouping efficiency of the battery case 20, and the battery case 20 can be applied to application scenarios in which the height is limited.

In some embodiments of the present application, as shown in FIG. 6, at least one TOX riveting point of the side wall of the groove 211 and the housing 22 is provided, the sealing member 23 is provided with avoidance holes 231 with the same number as the TOX riveting points, and the avoidance holes 231 corresponds to the TOX riveting points in a one-to-one basis.

Specifically, the end cap 21 is connected and fixed to the housing 22 by means of TOX riveting, and the end cap 21 is connected and fixed to the housing 22 by using at least one TOX riveting point. When the end cap 21 is connected and fixed to the housing 22, the avoidance holes 231 are arranged corresponding to the TOX riveting points, which ensures that in the process of TOX riveting, the structure at the riveting point passes through the avoidance hole 231 and is riveted and fixed, thereby ensuring that the end cap 21 and the housing 22 can be riveted effectively, and further ensuring the strength of connection and fixation between the end cap 21 and the housing 22.

It should be understood that the avoidance hole 231 is provided, so that the sealing member 23 can be prevented from influencing the process of TOX riveting, which ensures the strength and stability of the riveting position.

It should be noted that the avoidance hole 231 may be a circular hole, a square hole, a triangular hole or a hole in other shapes. As shown in FIG. 6, in an embodiment of the present application, the avoidance hole 231 is a circular hole, the aperture of the circular hole being greater than or equal to the size of the riveting point.

In some embodiments of the present application, a plurality of TOX riveting points are provided, and all the TOX riveting points are arranged at intervals in a circumferential direction of the open end.

In an embodiment of the present application, the plurality of TOX riveting points are provided, and all the TOX riveting points are arranged at intervals in a circumferential direction (a circumferential direction of the open end of the housing 22) of the side wall of the groove 211. The plurality of TOX riveting points are provided to further increase riveting positions between the end cap 21 and the housing 22, so that the strength of connection between the end cap 21 and the housing 22 is further enhanced and the sealing between the end cap 21 and the housing 22 is further ensured.

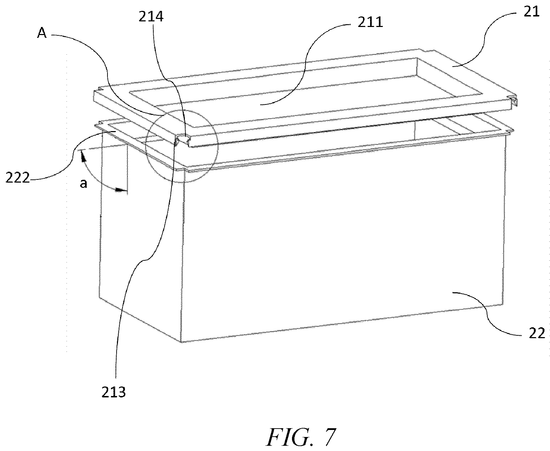

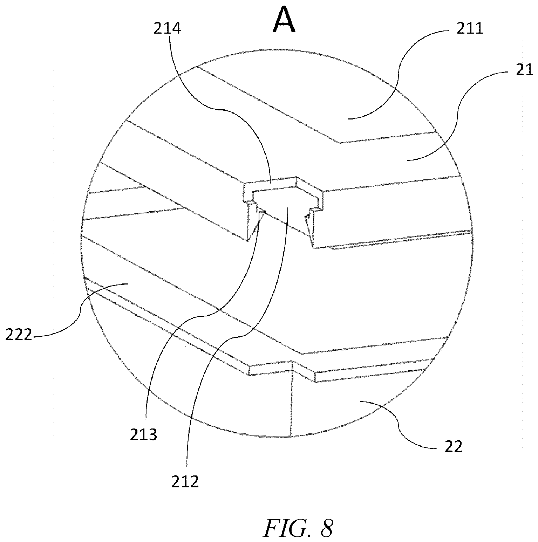

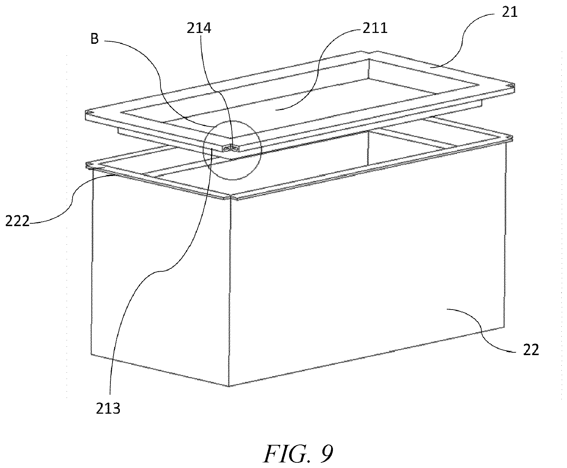

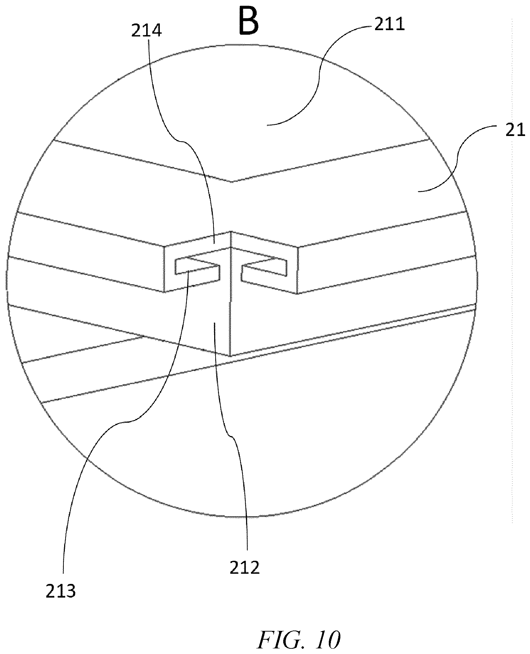

In some embodiments of the present application, as shown in FIG. 7 and FIG. 8, or as shown in FIG. 9 and FIG. 10, a first connecting structure 213 is provided on the edge of the end cap 21, a second connecting structure 222 is provided on a peripheral surface of the open end, and the first connecting structure 213 fits with the second connecting structure 222 to connect and fix the end cap 21 to the housing 22.

Specifically, the first connecting structure 213 is arranged on the end cap 21, and the second connecting structure 222 is arranged on the housing 22. When the end cap 21 is connected and fixed to the housing 22, the end cap 21 and the sealing member 23 are mounted in place at the open end of the housing 22, and the connection and fixation between the end cap 21 and the housing 22 are realized by means of the fit between the first connecting structure 213 and the second connecting structure 222.

It should be understood that the second connecting structure 222 is located on the outer side of the housing 22, and the first connecting structure 213 fits with the second connecting structure 222 to realize the connection and fixation between the end cap 21 and the housing 22. The connecting position between the end cap 21 and the housing 22 is provided on the outer side of the battery case 20, which not only facilitates the connection and fixation between the end cap 21 and the housing 22, but also avoids occupying the internal space of the battery case 20.

In some embodiments of the present application, as shown in FIG. 7, the second connecting structure 222 is of a plate-like structure in snap fit with the first connecting structure 213, and a side of the plate-like structure facing the bottom of the housing 22 is arranged at a preset angle a with respect to a side face of the housing 22, wherein 0° < a ≤ 90°.

Specifically, the second connecting structure 222 is arranged on the outer surface of the housing 22, and the second connecting structure 222 of the plate-like structure protrudes outwards from the outer surface of the housing 22. The second connecting structure 222 is configured as the plate-like structure, the angle a between the plate-like structure and the outer surface of the housing 22 is set such that the second connecting structure 222 of the plate-like structure is inclined to the side of the bottom of the housing 22, and when the first connecting structure 213 fits with the second connecting structure 222, the strength of the first connecting structure 213 and the second connecting structure 222 is ensured.

It should be understood that the second connecting structure 222 is configured as the plate-like structure to facilitate the connection and fixation between the first connecting structure 213 and the second connecting structure 222, thus facilitating the assembly of the battery case 20 and effectively improving the production efficiency.

It should be noted that the second connecting structure 222 of the plate-like structure may be a structure integrated with the housing 22, or a structure separated from the housing 22. In the case where the second connecting structure 222 is integrated with the housing 22, simultaneous processing and manufacturing (e.g., cast molding or stamp molding) are performed when the housing 22 is manufactured, and the integrated structure has a high strength, which ensures the strength and stability of connection between the second connecting structure 222 and the housing 22; and in the case where the second connecting structure 222 is separated from the housing 22, the second connecting structure 222 and the housing 22 are processed and manufactured separately, and then the second connecting structure 222 is connected and fixed to the housing 22 by means of welding or bonding, so that the separated structure facilitates processing and can effectively improve the processing efficiency.

In addition, the preset angle a between the housing 22 and the plate-like structure may be 30°, 40°, 50°, 60°, 70°, 80° ... 90°. In the present application, the preset angle a is 90°.

When the second connecting structure 222 is of the plate-like structure, the first connecting structure 213 may be of various structures.

As shown in FIG. 7 and FIG. 8, in some embodiments of the present application, the first connecting structure 213 is of a hook structure.

Specifically, the first connecting structure 213 is configured as the hook structure, so that the end cap 21 is connected and fixed to the housing 22 so long as the hook structure is hooked onto the second connecting structure 222 of the plate-like structure. The hook structure has a simple structure and a low manufacturing cost, and facilitates the assembly when the end cap 21 is connected and fixed to the housing 22.

It should be understood that the first connecting structure 213 of the hook structure is arranged on the edge of the end cap 21, and when the end cap 21 is connected and fixed to the housing 22, an external force drives the hook structure to elastically deform. After the hook structure passes over the second connecting structure 222 of the plate-like structure, the end cap 21 is mounted in place on the housing 22, the external force is removed, the hook structure restores from the elastic deformation, and the hook structure is hooked onto the plate-like structure, thus realizing the fit between the first connecting structure 213 and the second connecting structure 222.

It should be noted that in the circumferential direction of the housing 22, the dimension of the hook structure is less than or equal to the dimension of the plate-like structure, so that the strength of engagement between the hook structure and the plate-like structure is ensured, which ensures the strength and stability of connection between the end cap 21 and the housing 22.

In addition, the hook structure is adapted to the plate-like structure. The plate-like structure extends along the circumference of the housing 22. The plate-like structure may be of a continuous or discontinuous structure in the circumferential direction of the housing 22. The hook structure may also be of a continuous or discontinuous structure in the circumferential direction of the housing 22.

In some embodiments of the present application, as shown in FIG. 8, the hook structure is provided with a notch 214 at a corner of the end cap 21.

Specifically, in the present application, the housing 22 is of a rectangular structure, and the end cap 21 is also of a rectangular structure. The first connecting structure 213 of the hook structure is arranged in the circumferential direction of the end cap 21, the end cap 21 has the corner, and the hook structure is provided with the notch 214 at the corner, so that the hook structure is prevented from interference at the corner, which ensures the fit between the first connecting structure 213 and the second connecting structure 222.

It should be understood that the hook structure is provided with the notch 214 at the corner of the end cap 21, which can prevent the end cap 21 from breakage due to stress concentration at the corner.

In some embodiments of the present application, as shown in FIG. 9 and FIG. 10, the first connecting structure 213 is of an edge-folded structure.

Specifically, in the case where the first connecting structure 213 is not connected and fixed to the second connecting structure 222, the first connecting structure 213 is of a plate-like structure; and in the case where the end cap 21 is connected and fixed to the housing 22, the first connecting structure 213 is bent by using an edge folding apparatus after the end cap 21, the sealing member 23 and the housing 22 are mounted in place, such that the first connecting structure 213 of the plate-like structure is bent relative to the second connecting structure 222 and surround the edge of the second connecting structure 222, forming an edge-folded structure to connect and fix the first connecting structure 213 to the second connecting structure 222. The first connecting structure 213 is configured as the edge-folded structure, which improves the strength of connection between the first connecting structure 213 and the second connecting structure 222 and further ensures the strength of connection between the end cap 21 and the housing 22.

It should be understood that the first connecting structure 213 of the edge-folded structure is arranged on the edge of the end cap 21, and when the end cap 21 is connected and fixed to the housing 22, the edge-folded structure is arranged corresponding to the second connecting structure 222 of the plate-like structure. When the end cap 21 is mounted in place on the housing 22, the edge-folded structure is edge-folded by using the edge folding apparatus, so that the edge-folded structure is formed on the outer side of the plate-like structure to realize the connection between the first connecting structure 213 and the second connecting structure 222, which in turn realizes the connection and fixation between the end cap 21 to the housing 22.

It should be noted that in the circumferential direction of the housing 22, the dimension of the edge-folded structure is less than or equal to the dimension of the plate-like structure, so that the strength of connection between the edge-folded structure and the plate-like structure is ensured, which ensures the strength and stability of connection between the end cap 21 and the housing 22.

In addition, the edge-folded structure is adapted to the plate-like structure. The plate-like structure extends along the circumference of the housing 22. The plate-like structure may be of a continuous or discontinuous structure in the circumferential direction of the housing 22. The edge-folded structure may also be of a continuous or discontinuous structure in the circumferential direction of the housing 22.

In some embodiments of the present application, as shown in FIG. 10, the edge-folded structure is provided with a notch 214 at a corner of the end cap 21.

Specifically, in the present application, the housing 22 is of a rectangular structure, and the end cap 21 is also of a rectangular structure. The first connecting structure 213 of the edge-folded structure is arranged in the circumferential direction of the end cap 21, the end cap 21 has the corner, and the edge-folded structure is provided with the notch 214 at the corner, so that the edge-folded structure is prevented from interference at the corner, which ensures the fit between the first connecting structure 213 and the second connecting structure 222.

It should be understood that the edge-folded structure is provided with the notch 214 at the corner of the end cap 21, which can prevent the end cap 21 from breakage due to stress concentration at the corner.

In some embodiments of the present application, an abutting structure 221 is provided in the housing 22, the abutting structure 221 is arranged in the circumferential direction of the open end, and the sealing member 23 abuts against the abutting structure 221.

Specifically, the abutting structure 221 is arranged on an inner side wall of the housing 22 and close to the open end of the housing 22. When the end cap 21 is connected and fixed to the housing 22, the sealing member 23 is first arranged in the housing 22 and abuts against the abutting structure 221, and then the end cap 21 is fitted with the housing 22. After the end cap 21 is connected and fixed to the housing 22, the sealing member 23 is sandwiched between the sealing region 212 and the inner wall of the housing 22, thus forming a sealing structure. Providing the abutting structure 221 enables the sealing member 23 to be supported by using an abutting member, so that the mounting position of the sealing member 23 is ensured, which in turn ensures the sealing effect between the end cap 21 and the housing 22.

It should be noted that the abutting structure 221 may be of a plate-like structure or a boss structure formed on the inner wall of the housing 22.

In a second aspect of the present application, a battery cell 11 is provided. The battery cell 11 includes a battery case 20 as described above.

In a third aspect of the present application, a battery 100 is provided. The battery 100 includes a battery cell 11 as described above.

In a fourth aspect of the present application, a power consuming device is provided. The power consuming device includes a battery 100 as described above.

The above description is only an overview of the technical solutions of the present application. In order to more clearly understand the technical means of the present application to implement same according to the contents of the description, and in order to make the above and other objectives, features and advantages of the present application more obvious and understandable, specific implementations of the present application are exemplarily described below.

In some embodiments of the present application, as shown in FIG. 1 to FIG. 10, the present application further provides a battery case 20. The battery case 20 includes the end cap 21 and the housing 22. The end cap 21 is provided with the groove 211. The sealing region 212 is formed in a region at the edge of the end cap 21 corresponding to the groove 211. When the battery case 20 is assembled, the sealing member 23 is arranged on the abutting structure 221 in the housing 22, and then the end cap 21 is arranged on the housing 22 and covers the open end of the housing 22. The housing 22 is connected and fixed to the side wall of the groove 211 by means of TOX riveting to fix the housing 22 to the end cap 21. The sealing member 23 is sandwiched between the inner wall of the housing 22 and the sealing region 212 of the end cap 21 to form a sealing structure. The sealing structure can enables the space occupied in the height direction of the battery case 20 to be reduced, so that the space in the battery case 20 is increased, which in turn improves the PACK grouping efficiency of the battery case 20 and enables the battery case 20 to be applied to application scenarios in which the height is limited.

It should be understood that in the present application, the sealing structure of the battery case 20 enables a sealing interface to be reduced from 23 mm*23 mm to 10 mm* 10 mm.

Finally, it should be noted that the above embodiments are merely used for illustrating rather than limiting the technical solutions of the present application. Although the present application has been illustrated in detail with reference to the foregoing embodiments, it should be understood by those of ordinary skill in the art that the technical solutions described in the foregoing embodiments may still be modified, or some or all of the technical features thereof may be equivalently substituted; and such modifications or substitutions do not make the essence of the corresponding technical solution depart from the scope of the technical solutions of the embodiments of the present application, and should fall within the scope of the claims and the description of the present application. In particular, the technical features mentioned in the embodiments can be combined in any manner, provided that there is no structural conflict. The present application is not limited to the specific embodiments disclosed herein but includes all the technical solutions that fall within the scope of the claims.

## Claims

1. A battery case, **characterized by** comprising:
a housing, the housing having an open end;
an end cap, the end cap fitting with the housing and covering the open end, the end cap being provided with a groove and a sealing region, the groove being provided in a surface of the end cap facing away from the housing, and the sealing region being arranged on a peripheral surface of the end cap and corresponding to an inner side wall of the groove; and
a sealing member, the sealing member being arranged between an inner wall of the housing and the sealing region.

2. The battery case according to claim 1, **characterized in that** the groove is provided in a height direction of the housing, and the dimension of the sealing region in the height direction of the housing is less than or equal to the depth of the groove.

3. The battery case according to claim 2, **characterized in that** the dimension of the sealing region in the height direction of the housing is 10 mm, and the distance between the sealing region and the inner wall of the housing is 10 mm.

4. The battery case according to claim 1, **characterized in that** a side wall of the groove is connected and fixed to the housing by means of TOX riveting.

5. The battery case according to claim 4, **characterized in that** at least one TOX riveting point of the side wall of the groove and the housing is provided, the sealing member is provided with avoidance holes with the same number as the TOX riveting points, and the avoidance holes corresponds to the TOX riveting points in a one-to-one basis.

6. The battery case according to claim 5, **characterized in that** a plurality of TOX riveting points are provided, and all the TOX riveting points are arranged at intervals in a circumferential direction of the open end.

7. The battery case according to claim 1, **characterized in that** a first connecting structure is provided on an edge of the end cap, a second connecting structure is provided on a peripheral surface of the open end, and the first connecting structure fits with the second connecting structure to connect and fix the end cap to the housing.

8. The battery case according to claim 7, **characterized in that** the second connecting structure is of a plate-like structure in snap fit with the first connecting structure, and a side of the plate-like structure facing the bottom of the housing is arranged at a preset angle a with respect with a side face of the housing, wherein 0° < a ≤ 90°.

9. The battery case according to claim 8, **characterized in that** the first connecting structure is of a hook structure.

10. The battery case according to claim 9, **characterized in that** the hook structure is provided with a notch at a corner of the end cap.

11. The battery case according to claim 8, **characterized in that** the first connecting structure is of an edge-folded structure.

12. The battery case according to claim 11, **characterized in that** the edge-folded structure is provided with a notch at a corner of the end cap.

13. The battery case according to claim 1, **characterized in that** an abutting structure is provided in the housing, the abutting structure is arranged in a circumferential direction of the open end, and the sealing member abuts against the abutting structure.

14. A battery, **characterized by** comprising a battery case according to any one of claims 1-13.

15. A power consuming device, **characterized by** comprising a battery according to claim 14.
